# EUROPEAN PATENT SPECIFICATION

(11) **EP 0 684 323 B1**
(45) Date of publication and mention of the grant of the patent: **15.03.2000**
(21) Application number: 95108038.1
(22) Date of filing: 25.05.1995
(51) Int. Cl.: C23C 26/00, C23C 30/00, C04B 28/26

(54) **Boron nitride-silicate sealant**
Bornitrid-Silikat-Dichtungsmittel
Composition de scellement contenant du nitrure de bore et silicate

(30) Priority: 26.05.1994 US 249767
(43) Date of publication of application: 29.11.1995
(73) Proprietor: PRAXAIR S.T. TECHNOLOGY, INC., Danbury, Connecticut 06810-5113 (US)
(72) Inventor: Starvos, Anthony John, Carmel, Indiana 46033 (US)
(74) Representative: Schwan, Gerhard, Dipl.-Ing.

(56) References cited:
- EP-A- 0 426 485
- FR-A- 2 289 456
- GB-A- 885 632
- PATENT ABSTRACTS OF JAPAN vol. 7 no. 92 (M-208) ,16 April 1983 & JP-A-58 016762 (NIPPON KOKAN) 31 January 1983,
- PATENT ABSTRACTS OF JAPAN vol. 15 no. 112 (C-0815) ,18 March 1991 & JP-A-03 002384 (SUZUKI MOTOR) 8 January 1991,
- PATENT ABSTRACTS OF JAPAN vol. 16 no. 528 (C-1001) ,29 October 1992 & JP-A-04 198298 (NISSHIN STEEL ) 17 July 1992,
- PATENT ABSTRACTS OF JAPAN vol. 16 no. 394 (C-0976) ,21 August 1992 & JP-A-04 130195 (NISSHIN STEEL CORP) 1 May 1992,

## Description

### Field of the Invention

The invention relates to a boron nitride-silicate sealant having excellent resistance to molten metal, specially molten zinc, and the sealant preferably applied to a component which contacts or is immersed in molten zinc in a hot-dip zinc plating line.

### Background of the Invention

Molten zinc attacks metals such as steel and the like and easily penetrates into small holes or gaps in the micrometer range because of its low surface tension and viscosity. Some protecting methods are proposed or are in use for improving the resistance to molten zinc, as for example, specially developed steels as disclosed in Laid Open Japanese Patent Application No. S56-112117 and applying a thermally sprayed WC-Co coating as disclosed in Japan Patent Application Laid Open No. 111-225761. However, these approaches are not sufficiently resistant to molten zinc attack.

In FR-A-2 289 456 there is disclosed a lubrification composition which comprises an aqueous dispersion of 6 to 18 wt.% boron nitride, 9 to 26 wt.% of a water soluble silicate binder and a series of further additions. After applying the composition to an article to be lubricated, the water is removed, for instance by heating of the treated article.

In accordance with EP-A-0 426 485 compositions are prepared by adding water to insoluble materials to that they may be "painted" onto a substrate surface. Heating then evaporates the water and leaves the "paint" solids which have not in any way interacted with the water. The composition may comprise as particulate powder boron nitride in an amount of 20 to 99 weight percent based on the weight of the solid components, and clay dispersed in water.

JP-A-58-16 762 suggests a lubrification solution for moulds for continuous casting machines. The solution may comprise 10 to 40 wt.% lithium silicate, 5 to 50 % water and 10 to 50 % graphite, fluorocarbon, boron nitride, calcium fluoride etc. After applying the solution onto the inside surfaces of the molds, the solution is dried.

Molten zinc resistant steels are basically iron base alloys and do not have enough resistance to molten zinc attack. The cost of those alloys are much higher than normal structural steels. Coatings such as self fluxing alloys and WC-Co are used as thermally sprayed coatings to protect substrates from attack by molten zinc, but sufficient resistance has not been achieved due to the permeation of molten zinc through interconnected porosity and selective attack on the metal binders.

Some sealants that provide protection for rolls used in zinc pots on galvanizing lines, have a tendency to accumulate oxides, dross and the like on the surface of such rolls during operation. The buildup of these oxides, dross and the like could mark steel strip passing over the rolls thus resulting in poor quality steel products.

It is an object of the present invention to provide a process for sealing an outer surface of articles, such as rolls that are intended to come into contact with or be immersed in a molten metal, to provide resistance to molten metal attack and minimize buildup of oxides, dross and the like on the surface of such articles. As used herein dross means an intermetallic alloy or compound of, but not limited to aluminum, zinc, iron and combinations thereof.

Another object of the present invention is to provide a boron nitride-silicate sealant that is easy to apply and cost effective to produce.

The object of the invention is solved by the process as claimed in claim 1. Preferred embodiments of the process are defined in claims 2 to 8.

### Summary of the Invention

The invention relates to a sealing material having an improved resistance to molten metal attack, such as molten zinc, and anti-wettability thus making it ideally suitable for coating structural materials, such as rolls, that are intended to be used in or in contact with molten zinc, aluminum, or zinc-aluminum alloys.

The invention relates to a sealing material having an improved resistance to molten zinc attack and being anti-wettability thus making it ideally suitable for structural materials or thermally sprayed coating that are intended to be used on or in contact with molten metals.

A suitable sealant of this invention which showed excellent durability in molten zinc bath is formed by a process comprising the following steps:
(a) preparing a water solution containing boron nitride and silicide;
(b) applying the solution on the surface of an article to be sealed; and
(c) heating the coated article in an appropriate temperature range to substantially remove the water from the coating.

Accordingly, the present invention is to provide firstly a sealant having an excellent resistance to molten metal, specially to molten zinc, and secondly a sealant that will minimize buildup of oxides, dross and the like when used in contact with a molten metal such as zinc. The sealant comprises an aqueous solution of boron nitride and silicate which can be applied to the surface of an article by painting, spraying, such as thermal spraying, or using any other conventional technique. Preferably, the aqueous sealant solution could contain 9 to 15 weight percent boron nitride solids, 13 to 24 weight percent silicate solids and the balance water, with the most preferred being from 10.5 to 13.5 weight percent boron nitride solids, from 17 to 20 percent silicate solids and the balance water. After applying the aqueous solution to an article, it is dried to remove substantially all of the water. Preferably, the water in the coating should be reduced to 10% or less of the water used in the aqueous solution and preferably reduced to 5% or less of the water used in the aqueous solution. To insure removal of the water, the coated nitride could be heated above 100°C (212°F) for a time period to reduce the water in the coating to 5% or less. Generally, a time period of 1 to 10 hours would be sufficient, with a time period of 4 to 8 hours being preferred. It is preferable to heat the coated article above 100°C (212°F), since water in solution can not be effectively vaporized below 100°C (212°F). Excessive residual water can result in cracks in the sealant layer when it is rapidly heated up to the molten zinc temperature which is approximately 470°C.

Preferably silicates for use in this invention have the general formula:

M₂O•xSiO₂•yH₂O

where
M is an alkali metal,
x is the number of moles of SiO₂ with a range of 1.6 to 4, and
y is the number of moles of H₂O with a value of at least 1. Preferably, M would be an element selected from the group consisting of sodium, potassium and lithium.

Suitable silicate solutions would be 26.5 weight percent SiO₂, 10.6 weight percent Na₂O with the remainder water; 20.8 weight percent K₂O, 8.3 weight percent SiO₂ with the remainder water; and 28.7 weight percent SiO₂, 8.9 weight percent Na₂O with the remainder water. It is also within the scope of this invention to use two different M₂O components, such as a mixture of Na₂O and K₂O.

Once the sealant is deposited on a substrate and the water is substantially removed, it could contain 15 to 70 weight percent boron nitride and 30 to 85 weight percent silicate, preferably 31 to 56 weight percent boron nitride and 44 to 69 weight percent silicate and most preferably 41.5 to 47.5 weight percent boron nitride and 52.5 t 58.5 weight percent silicate. The boron nitride-silicate sealant will resist buildup of oxide and dross of this invention which generally adhere to an article when in contact with a molten metal such as molten zinc. The amount of boron nitride should be sufficient to provide a non-stick surface while the silicate is used to maintain the boron nitride on the surface of an article such as a roll, thus sealing the roll from penetration of molten metal, such as molten zinc. To enhance penetration of the sealant into the pores on the surface of the article, such as a roll, a suitable wetting agent can be added such as various stearates, phosphates or common household detergents. Preferably an amount of about 2 weight percent or less would be sufficient for most application. The boron nitride to be used can be highly pure or can be mixed with clays, aluminas, silica and carbon. Thus inexpensive commercial boron nitride can be used in this invention. Generally, rolls intended for use with molten zinc are coated with a protective layer such as tungsten carbide cobalt, alumina, zirconia or molybdenum boride. The sealant of this invention can then be deposited over the coating to prevent penetration of molten zinc to the substrate of the roll and also to minimize buildup of oxides and/or dross on the surface of the coated roll from the molten zinc.

### EXAMPLE 1

On a hot dip coating line producing 55% Al-Zn coated steel strip, pot roll failures due to pickup of dross and/or oxides have been reported to occur in as little as 4 to 5 days. A failure refers to deposits on the coated roll which can cause denting or other damage of the steel sheet or other material contacting the roll.

A test was performed in which a 316L stainless steel pot roll was coated with 5 to 7 mils of tungsten carbide cobalt by a detonation gun method. The coating was sealed by two applications of a sodium silicate solution containing boron nitride with a composition as follows.
40 wt/% BN "paint" (more than 30% BN, less than 4% clay and more than 66% H₂O)
10 wt/% H₂O
50 wt/% (2.5 ratio SiO₂/Na₂O) sodium silicate solution.

After the second application of the sealant on the roll, the roll was baked in air at a temperature slightly over 100°C (212°F) for 6 hours.

The roll performed successfully on a hot dip zinc coating line for 18 days while an uncoated roll would be expected to last only 4 days. Upon removal from the molten 55% Al-Zn bath, dross buildup was found across 3/4 of the roll face. This roll was then pickled in dilute H₂SO₄ (HC1 could also be used) to remove the buildup without damaging the coating and then the coated roll was put back into service.

### EXAMPLE 2

All three rolls of a nominally pure zinc galvanizing line coating rig (1 grooved sinker roll and 2 smooth stabilizer rolls) were coated and sealed as described in Example 1. After nine days of service the coating rig was removed for inspection during routine maintenance line shutdown. It was found that the zinc was easily removed from the roll faces by wiping and then the roll was returned to service. After similar service, the roll faces of unsealed rolls would be completely covered with zinc that could not be removed except by mechanical means or pickling.

It is to be understood that modifications and changes to the preferred embodiment of the invention can be made without departing from the scope of the claims.

## Claims

1. A process for sealing an outer porous surface of an article against attack by molten zinc comprising the steps of:
(a) preparing a boron nitride-silicate-containing sealant by preparing boron nitride in an aqueous solution of silicate, said aqueous solution containing 6 to 18 weight percent boron nitride solids, 9 to 26 percent silicate solids and the balance water;
(b) applying the solution on said outer porous surface of the article; and
(c) heating the coated article of step (b) for a time period to substantially remove the water in the sealant coating.

2. The process of claim 1 wherein in step (c) the coated article is heated at a temperature of 100 °C (212 °F) or above.

3. The process of claim 1 wherein in step (a) the boron nitride solids are present in an amount of 9 to 15 weight percent, said silicate solids are present in an amount of 13 to 24 weight percent, and said water is the balance.

4. The process of claim 1 wherein the silicate has the formula:
M₂O • xSiO₂ • yH₂O
where
M is an alkali metal,
x is the number of moles of SiO₂ with a range of 1.6 to 4, and
y is the number of moles H₂O with a value of at least 1.

5. The process of claim 4 wherein M is selected from the group consisting of sodium, potassium, and lithium.

6. The process of claim 1 wherein in step (a) the boron nitride is highly pure boron nitride.

7. The process of claim 1 wherein in step (a) the boron nitride is commercial boron nitride containing admixtures of at least one material selected from the group consisting of clay, alumina, silica and carbon.

8. The process of claim 1 wherein a wetting agent selected from the group consisting of stearates, phosphates and detergents is added to the sealant solution.

## Patentansprüche

1. Verfahren zum Versiegeln einer porösen Außenfläche eines Gegenstandes gegen einen Angriff durch schmelzflüssiges Zink, wobei im Zuge des Verfahrens:
(a) ein Bornitrid-Silikat enthaltendes Dichtmittel hergestellt wird, indem Bornitrid in einer wäßrigen Silikatlösung zubereitet wird, die 6 bis 18 Gew.% Bornitrid-Feststoffe und 9 bis 26 % Silikat-Feststoffe, Rest Wasser, enthält;
(b) die Lösung auf die poröse Außenfläche des Gegenstandes aufgebracht wird; und
(c) der beschichtete Gegenstand aus Schritt (b) für eine Zeitdauer erwärmt wird, um das Wasser in dem Dichtmittelüberzug im wesentlichen zu beseitigen.

2. Verfahren nach Anspruch 1, wobei im Schritt (c) der beschichtete Gegenstand auf eine Temperatur von 100 °C (212 °F) oder mehr erwärmt wird.

3. Verfahren nach Anspruch 1, wobei im Schritt (a) die Bornitrid-Feststoffe in einer Menge von 9 bis 15 Gew.% anwesend sind, die Silikat-Feststoffe in einer Menge von 13 bis 24 Gew.% anwesend sind, und das Wasser den Rest ausmacht.

4. Verfahren nach Anspruch 1, wobei das Silikat die Formel:
M₂O • xSiO₂ • yH₂O
hat, wobei
M ein Alkalimetall ist,
x die Anzahl der Mole von SiO₂ ist und im Bereich von 1,6 bis 4 liegt, und
y die Anzahl der Mole von H₂O ist und einen Wert von mindestens 1 hat.

5. Verfahren nach Anspruch 4, wobei M aus der aus Natrium, Kalium und Lithium bestehenden Gruppe ausgewählt ist.

6. Verfahren nach Anspruch 1, wobei im Schritt (a) das Bornitrid hochreines Bornitrid ist.

7. Verfahren nach Anspruch 1, wobei im Schritt (a) das Bornitrid handelsübliches Bornitrid ist, welches Beimischungen von mindestens einem Material enthält, welches aus der aus Ton, Aluminiumoxid, Siliziumoxid und Kohlenstoff bestehenden Gruppe ausgewählt ist.

8. Verfahren nach Anspruch 1, wobei ein Benetzungsmittel, welches aus der aus Stearaten, Phosphaten und Detergienten bestehenden Gruppe ausgewählt ist, der Dichtmittellösung zugegeben wird.

## Revendications

1. Procédé pour rendre une surface poreuse extérieure d'un article étanche vis-à-vis de l'attaque par le zinc fondu, comprenant les étapes consistant :
(a) à préparer un agent d'étanchéité contenant du nitrure de bore-silicate en préparant du nitrure de bore dans une solution aqueuse d'un silicate, ladite solution aqueuse contenant 6 à 18 % en poids de nitrure de bore solide, 9 à 26 % de silicate solide et le pourcentage restant d'eau ;
(b) à appliquer la solution sur ladite surface extérieure poreuse de l'article ; et
(c) à chauffer l'article revêtu de l'étape (b) pendant un temps permettant d'éliminer essentiellement l'eau dans le revêtement d'agent d'étanchéité.

2. Procédé suivant la revendication 1, dans lequel, dans l'étape (c), l'article revêtu est chauffé à une température égale ou supérieure à 100°C (212°F).

3. Procédé suivant la revendication 1, dans lequel, dans l'étape (a), le nitrure de bore solide est présent en une quantité de 9 à 15 % en poids, le silicate solide est présent en une quantité de 13 à 24 % en poids et l'eau représente le pourcentage restant.

4. Procédé suivant la revendication 1, dans lequel le silicate répond à la formule :
M₂O • xSiO₂ • yH₂O
dans laquelle
M représente un métal alcalin,
x représente le nombre de moles de SiO₂ dans l'intervalle de 1,6 à 4, et
y représente le nombre de moles de H₂O ayant une valeur d'au moins 1.

5. Procédé suivant la revendication 4, dans lequel M est choisi dans le groupe consistant en le sodium, le potassium et le lithium.

6. Procédé suivant la revendication 1, dans lequel, dans l'étape (a), le nitrure de bore consiste en nitrure de bore extrêmement pur.

7. Procédé suivant la revendication 1, dans lequel, dans l'étape (a), le nitrure de bore consiste en nitrure de bore du commerce contenant des mélanges d'au moins une matière choisie dans le groupe consistant en une argile, l'alumine, la silice et le carbone.

8. Procédé suivant la revendication 1, dans lequel un agent mouillant choisi dans le groupe consistant en des stéarates, des phosphates et des détergents est ajouté à la solution d'agent d'étanchéité.
